# EUROPÄISCHE PATENTSCHRIFT

(11) **EP 1 165 658 B1**
(45) Veröffentlichungstag und Bekanntmachung des Hinweises auf die Patenterteilung: **23.05.2007**
(21) Anmeldenummer: 00901608.0
(22) Anmeldetag: 31.01.2000
(51) Int. Cl.: C08G 65/26, B01J 27/26

(54) **DOPPELMETALLCYANID-KATALYSATOREN FÜR DIE HERSTELLUNG VON POLYETHERPOLYOLEN**
DOUBLE METAL CYANIDE CATALYSTS FOR PRODUCING POLYETHER POLYOLS
CATALYSEURS A BASE DE CYANURES METALLIQUES DOUBLES DESTINES A LA PREPARATION DE POLYETHER-POLYOLS

(30) Priorität: 11.02.1999 DE 19905611; 24.03.1999 DE 19913260; 07.05.1999 DE 19920937
(43) Veröffentlichungstag der Anmeldung: 02.01.2002
(73) Patentinhaber: Bayer MaterialScience AG, 51368 Leverkusen (DE)
(72) Erfinder: HOFMANN, Jörg, D-47829 Krefeld (DE); OOMS, Pieter, D-47800 Krefeld (DE); GUPTA, Pramod, D-50181 Bedburg (DE); SCHÄFER, Walter, D-42799 Leichlingen (DE); LOHRENZ, John, D-51377 Leverkusen (DE)
(86) Internationale Anmeldenummer: PCT/EP2000/000728
(87) Internationale Veröffentlichungsnummer: WO 2000/047650

(56) Entgegenhaltungen:
- WO-A-83/00694
- US-A- 5 714 428
- DATABASE WPI Section Ch, Week 199303 Derwent Publications Ltd., London, GB; Class A25, AN 1993-023485 XP002138889 & JP 04 351632 A (ASAHI GLASS CO LTD), 7. Dezember 1992 (1992-12-07)
- DATABASE WPI Section Ch, Week 199302 Derwent Publications Ltd., London, GB; Class A97, AN 1993-014181 XP002138890 & JP 04 342793 A (ASAHI GLASS CO LTD), 30. November 1992 (1992-11-30)

## Beschreibung

Die Erfindung betrifft neue Doppelmetallcyanid (DMC)-Katalysatoren für die Herstellung von Polyetherpolyolen durch Polyaddition von Alkylenoxiden an aktive Wasserstoffatome aufweisende Starterverbindungen.

Doppelmetallcyanid (DMC)-Katalysatoren für die Polyaddition von Alkylenoxiden an aktive Wasserstoffatome aufweisende Starterverbindungen sind bekannt (siehe z.B. US-A 3 404 109, US-A 3 829 505, US-A 3 941 849 und US-A 5 158 922). Der Einsatz dieser DMC-Katalysatoren für die Herstellung von Polyetherpolyolen bewirkt insbesondere eine Reduzierung des Anteils an monofunktionellen Polyethern mit endständigen Doppelbindungen, sogenannten Monoolen, im Vergleich zu der konventionellen Herstellung von Polyetherpolyolen mittels Alkali-Katalysatoren, wie Alkalihydroxiden. Die so erhaltenen Polyetherpolyole können zu hochwertigen Polyurethanen (z.B. Elastomere, Schäume, Beschichtungen) verarbeitet werden. DMC-Katalysatoren werden gewöhnlich erhalten, indem man eine wäßrige Lösung eines Metallsalzes mit der wäßrigen Lösung eines Metallcyanidsalzes in Gegenwart eines organischen Komplexliganden, z.B. eines Ethers, umsetzt. In einer typischen Katalysatorpräparation werden beispielsweise wäßrige Lösungen von Zinkchlorid (im Überschuß) und Kaliumhexacyanocobaltat gemischt und anschließend Dimethoxyethan (Glyme) zur gebildeten Suspension gegeben. Nach Filtration und Waschen des Katalysators mit wäßriger Glyme-Lösung wird ein aktiver Katalysator der allgemeinen Formel

Zn₃[Co(CN)₆]₂ • xZnCl₂ • yH₂O • z Glyme

erhalten (siehe z.B. EP-A 700 949).

Aus JP-A 4 145 123, US-A 5 470 813, EP-A 700 949, EP-A 743 093, EP-A 761 708 und WO 97/40086 sind DMC-Katalysatoren bekannt, die durch Einsatz von tert.-Butanol als organischem Komplexliganden (allein oder in Kombination mit einem Polyether (EP-A 700 949, EP-A 761 708, WO 97/40086)) den Anteil an monofunktionellen Polyethern mit endständigen Doppelbindungen bei der Herstellung von Polyetherpolyolen weiter reduzieren. Darüber hinaus wird durch den Einsatz dieser DMC-Katalysatoren die Induktionszeit bei der Polyadditionsreaktion der Alkylenoxide mit entsprechenden Starterverbindungen reduziert und die Katalysatoraktivität erhöht.

Aufgabe der vorliegenden Erfindung war es, weiter verbesserte DMC-Katalysatoren für die Polyaddition von Alkylenoxiden an entsprechende Starterverbindungen zur Verfügung zu stellen, die eine im Hinblick auf die bislang bekannten Katalysatortypen erhöhte Katalysatoraktivität aufweisen. Dies führt durch Verkürzung der Alkoxylierungszeiten zu einer verbesserten Wirtschaftlichkeit des Herstellprozesses von Polyetherpolyolen. Idealerweise kann durch die erhöhte Aktivität der Katalysator dann in so geringen Konzentrationen (25 ppm oder weniger) eingesetzt werden, daß die sehr aufwendige Katalysatorabtrennung aus dem Produkt nicht mehr notwendig ist, und das Produkt direkt zur Polyurethan-Herstellung verwendet werden kann.

Überraschend wurde jetzt gefunden, daß DMC-Katalysatoren, die eine ionische oberflächen- bzw. grenzflächenaktive Verbindung als Komplexliganden enthalten, bei der Polyetherpolyol-Herstellung stark erhöhte Aktivität besitzen.

Gegenstand der vorliegenden Erfindung ist daher ein Doppelmetallcyanid (DMC)-Katalysator, enthaltend
a) eine oder mehrere, vorzugsweise eine Doppelmetallcyanid-Verbindung,
b) einen oder mehrere, vorzugsweise einen, von c) verschiedenen organischen Komplextiganden, und
c) eine oder mehrere, vorzugsweise eine ionische oberflächen- bzw. grenzflächenaktive Verbindungen aus der Gruppe der Alkylcarboxylate, Ethercarboxylate, Malonate, Succinate, Gallensäuresalze, Aminosäurederivate, Sulfonamidocarboxylate, Alkylsulfate, Ethersulfate, sulfatierte Carboxylate, sulfatierte Carbonsäureglyceride, sulfatierte Carbonsäureester, sulfatierte Carbonsäureamide, Alkyl-, Aryl- und Alkylarylsulfonate, sulfonierte Carboxylate, sulfonierte Carbonsäureester, sulfonierte Carbonsäureamide, Carboxylestersulfonate, Carboxyamidsulfonate, Sulfobernsteinsäureester, Ethersulfonate, Thiosulfate, Alkylphosphate, Glycerinphosphate, Phosphonate, Phosphinate, Dithiophosphate, primäre, sekundäre, tertiäre und quaternäre Ammoniumsalze mit Alkyl-, Aryl- und Aralkylresten, alkoxylierte Ammoniumsalze, quaternäre Ammoniumester, Benzylammoniumsalze, Alkanolammoniumsalze, Pyridiniumsalze, Imidazoliniumsalze, Oxazoliniumsalze, Thiazoliniumsalze, Salze von Aminoxiden, Sulfoniumsalze, Chinoliniumsalze, Isochinoliniumsalze, Tropyliumsalze, Aminoxide, Imidazoliniumderivate, Alkylbetaine, Amidopropylbetaine, Sulfobetaine, Aminocarbonsäuren und Phospholipide.

In dem erfindungsgemäßen Katalysator können gegebenenfalls d) Wasser, vorzugsweise 1 bis 10 Gew.% und/oder e) eines oder mehrere wasserlösliche Metallsalze, vorzugsweise 5 bis 25 Gew.%, der Formel (I) M(X)ₙ aus der Herstellung der Doppelmetallcyanidverbindungen a) enthalten sein. In Formel (I) wird M ausgewählt aus den Metallen Zn (II), Fe (II), Ni (II), Mn (II), Co (II), Sn (II), Pb (II), Fe (III), Mo (IV), Mo (VI), Al (III), V (V), V (IV), Sr (II), W (IV), W (VI), Cu (II) und Cr (III). Besonders bevorzugt sind Zn (II), Fe (II), Co (II) und Ni (II). Die Anionen X sind gleich oder verschieden, vorzugsweise gleich, und bevorzugt ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Der Wert für n ist 1, 2 oder 3.

Die in den erfindungsgemäßen Katalysatoren enthaltenen Doppelmetallcyanid-Verbindungen a) sind die Reaktionsprodukte wasserlöslicher Metallsalze und wasserlöslicher Metallcyanidsalze.

Zur Herstellung von Doppelmetallcyanid-Verbindungen a) geeignete wasserlösliche Metallsalze besitzen bevorzugt die allgemeine Formel (I) M(X)ₙ, wobei M ausgewählt wird aus den Metallen Zn (II), Fe (II), Ni (II), Mn (II), Co (II), Sn (II), Pb (II), Fe (III), Mo (IV), Mo (VI), Al (III), V (V), V (IV), Sr (II), W (IV), W (VI), Cu (II) und Cr (III). Besonders bevorzugt sind Zn (II), Fe (II), Co (II) und Ni (II). Die Anionen X sind gleich oder verschieden, vorzugsweise gleich und werden bevorzugt ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Der Wert für n ist 1, 2 oder 3.

Beispiele geeigneter wasserlöslicher Metallsalze sind Zinkchlorid, Zinkbromid, Zinkacetat, Zinkacetylacetonat, Zinkbenzoat, Zinknitrat, Eisen(II)sulfat, Eisen(II)-bromid, Eisen(II)chlorid, Cobalt(II)chlorid, Cobalt(II)thiocyanat, Nickel(II)chlorid und Nickel(II)nitrat. Es können auch Mischungen verschiedener wasserlöslicher Metallsalze eingesetzt werden.

Zur Herstellung von Doppelmetallcyanid-Verbindungen a) geeignete wasserlösliche Metallcyanidsalze besitzen bevorzugt die allgemeine Formel (II) (Y)ₐ M'(CN)_{b} (A)_{c}, wobei M' ausgewählt wird aus den Metallen Fe(II), Fe(III), Co(II), Co(III), Cr(II), Cr(III), Mn(II), Mn(III), Ir(III), Ni(II), Rh(III), Ru(II), V(IV) und V(V). Besonders bevorzugt wird M' ausgewählt aus den Metallen Co(II), Co(III), Fe(II), Fe(III), Cr(III), Ir(III) und Ni(II). Das wasserlösliche Metallcyanidsalz kann eines oder mehrere dieser Metalle enthalten. Die Kationen Y sind gleich oder verschieden, vorzugsweise gleich, und werden ausgewählt aus der Alkalimetallionen und Erdalkalimetallionen umfassenden Gruppe. Die Anionen A sind gleich oder verschieden, vorzugsweise gleich, und werden ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Sowohl a als auch b und c sind ganzzahlig, wobei die Werte für a, b und c so gewählt sind, daß die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0. Beispiele geeigneter wasserlöslicher Metallcyanidsalze sind Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Bevorzugte Doppelmetallcyanid-Verbindungen a), die in den erfindungsgemäßen Katalysatoren enthalten sind, sind Verbindungen der allgemeinen Formel (III)

Mₓ[M'ₓ,(CN)_{y}]_{z},

worin M wie in Formel (I) und
M' wie in Formel (II) definiert ist, und
x, x', y und z ganzzahlig und so gewählt sind, daß die Elektronenneutralität der Doppelmetallcyanidverbindung gegeben ist.

Vorzugsweise ist
x=3, x'=1, y=6 und z=2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US-A 5 158 922 zu entnehmen. Besonders bevorzugt verwendet wird Zinkhexacyanocobaltat(III).

Die in den erfindungsgemäßen DMC-Katalysatoren enthaltenen organischen Komplexliganden b) sind im Prinzip bekannt und ausführlich im Stand der Technik beschrieben (beispielsweise in US-A 5 158 922, US-A 3 404 109, US-A 3 829 505, US-A 3 941 849, EP-A 700 949, EP-A 761 708, JP-A 4 145 123, US-A 5 470 813, EP-A 743 093 und WO 97/40086). Bevorzugte organische Komplexliganden sind wasserlösliche, organische Verbindungen mit Heteroatomen, wie Sauerstoff, Stickstoff, Phosphor oder Schwefel, die mit der Doppelmetallcyanid-Verbindung a) Komplexe bilden können. Geeignete organische Komplexliganden sind z.B. Alkohole, Aldehyde, Ketone, Ether, Ester, Amide, Harnstoffe, Nitrile, Sulfide und deren Mischungen. Bevorzugte organische Komplexliganden sind wasserlösliche aliphatische Alkohole, wie Ethanol, Isopropanol, n-Butanol, iso-Butanol, sek.-Butanol und tert.-Butanol. Besonders bevorzugt ist tert.-Butanol.

Der organische Komplexligand wird entweder während der Katalysatorpräparation zugegeben oder unmittelbar nach der Ausfällung der Doppelmetallcyanidverbindung a). Gewöhnlich wird der organische Komplexligand im Überschuß eingesetzt.

Die erfindungsgemäßen DMC-Katalysatoren enthalten die Doppelmetallcyanid-Verbindungen a) in Mengen von 20 bis 90 Gew.-%, bevorzugt 25 bis 80 Gew.-%. bezogen auf die Menge des fertigen Katalysators, und die organischen Komplexliganden b) in Mengen von 0,5 bis 30, bevorzugt 1 bis 25 Gew.-%, bezogen auf die Menge des fertigen Katalysators. Die erfindungsgemäßen DMC-Katalysatoren enthalten üblicherweise 1 bis 80 Gew.-%, bevorzugt 1 bis 40 Gew.-%, bezogen auf die Menge des fertigen Katalysators, an ionischen oberflächen- bzw. grenzflächenaktiven Verbindungen c).

Strukturelles Merkmal der zur Herstellung der erfindungsgemäßen Katalysatoren geeigneten ionischen oberflächen- bzw. grenzflächenaktiven Verbindungen c) ist ihr amphiphiler Molekülaufbau, d.h. sie enthalten mindestens eine hydrophile ionische Gruppe (bzw. einen hydrophilen ionischen Molekülteil) und mindestens eine hydrophobe Gruppe (bzw. einen hydrophoben Molekülteil). Beispiele für derartige ionische oberflächen- bzw. grenzflächenaktiven Verbindungen finden sich in der Gruppe der Tenside, Seifen, Emulgatoren, Detergentien und Dispergiermittel.

Die hydrophilen ionischen Gruppen können anionischer, kationischer oder zwitterionischer (amphoterer) Natur sein. Beispiele anionischer Gruppen sind Carboxylat-, Sulfonat-, Sulfat-, Thiosulfat-, Phosphonat-, Phosphinat-, Phosphat- oder Dithiophosphatgruppen. Beispiele kationischer Gruppen sind Ammonium-, Phosphonium- oder Sulfoniumgruppen. Beispiele zwitterionischer Gruppen sind Betain-, Sulfobetain- oder Aminoxidgruppen.

Die hydrophoben Gruppen sind bevorzugt C₂-C₅₀-Kohlenwasserstoffreste wie Aryl-, Aralkyl- und Alkylreste. Es sind aber auch Fluoroalkyl-, Silaalkyl-, Thiaalkyl- oder Oxaalkylgruppen geeignet.

Geeignete Verbindungsklassen mit hydrophilen anionischen Gruppen sind Alkylcarboxylate (Seifen), Ethercarboxylate (carboxymethylierte Ethoxylate), Malonate und Succinate, Gallensäuresalze, z.B. Gallensäureamide mit Sulfoalkyl- und Carboxyalkylresten in der Salzform, Aminosäurederivate wie Sarcoside (Alkanolysarcosinate), Sulfonamidocarboxylate, Alkylsulfate, Ethersulfate, z.B. Fettalkoholethersulfate, Arylethersulfate oder Amidoethersulfate, sulfatierte Carboxylate, sulfatierte Carbonsäureglyceride, sulfatierte Carbonsäureester, sulfatierte Carbonsäureamide, Alkyl-, Aryl- und Alkylarylsulfonate, sulfonierte Carboxylate, sulfonierte Carbonsäureester, sulfonierte Carbonsäureamide, Carboxylestersulfonate wie a-Sulfofettsäureester, Carboxyamidsulfonate, Sulfobernsteinsäureester, Ethersulfonate, Thiosulfate, Alkylphosphate oder Glycerinphosphate, Phosphonate, Phosphinate und Dithiophosphate.

Geeignete Verbindungsklassen mit hydrophilen kationischen Gruppen sind primäre, sekundäre, tertiäre und quartemäre Ammoniumsalze mit Alkyl-, Aryl- und Aralkylresten, alkoxylierte Ammoniumsalze, quartemäre Ammoniumester, Benzylammoniumsalze, Alkanolammoniumsalze, Pyridiniumsalze, Imidazoliniumsalze, Oxazoliniumsalze, Thiazoliniumsalze, Salze von Aminoxiden, Sulfoniumsalze, Chinoliniumsalze, Isochinoliniumsalze und Tropyliumsalze.

Geeignete Verbindungsklassen mit hydrophiler zwitterionischer (amphoterer) Gruppe sind Aminoxide, Imidazoliniumderivate wie Imidazoliniumcarboxylate, Alkyl- und Amidopropylbetaine, Sulfobetaine, Aminocarbonsäuren und Phospholipide, z.B. Phosphatidylcholin (Lecithin).

Natürlich können die ionischen oberflächen- bzw. grenzflächenaktiven Verbindungen auch mehrere hydrophile (anionische und/oder kationische und/oder zwitterionische) Gruppen bzw. Molekülteile enthalten.

Die ionischen oberflächen- bzw. grenzflächenaktiven Verbindungen c) können einzeln oder in Kombination eingesetzt werden.

Die zur Herstellung der erfindungsgemäßen Katalysatoren geeigneten ionischen oberflächen- bzw. grenzflächenaktiven Verbindungen sind allgemein gut bekannt und z.B. ausführlich beschrieben in "Ullmann's Encyclopedia of Industrial Chemistry", 5^{th} Edition, Vol. A25, S. 747-817, VCH, Weinheim, 1994, "Kirk-Othmer, Encyclopedia of Chemical Technology", 4^{th} Edition, Vol. 23, S. 477-541, John Wiley & Sons, New York, 1997, "Tensid-Taschenbuch", 2. Aufl., H. Stache (Hrsg.), Carl Hanser Verlag, München, 1982, "Surfactant Science Series", Vol. 1-74, M. J. Schick (Consulting Editor), Marcel Decker, New York, 1967-1998, "Methods in Enzymology", Vol. 182, M.P. Deutscher (Ed.), S.239-253, Academic Press, San Diego, 1990.

Die Analyse der Katalysatorzusammensetzung erfolgt üblicherweise mittels Elementaranalyse, Thermogravimetrie oder extraktiver Entfernung des Anteils der ionischen oberflächen- bzw. grenzflächenaktiven Verbindung mit anschliessender gravimetrischer Bestimmung.

Die erfindungsgemäßen Katalysatoren können kristallin, teilkristallin oder amorph sein. Die Analyse der Kristallinität erfolgt üblicherweise durch Pulverröntgendiffraktometrie.

Bevorzugt sind erfindungsgemäße Katalysatoren enthaltend
a) Zinkhexacyanocobaltat (III),
b) tert.-Butanol und
c) eine ionische oberflächen- bzw. grenzflächenaktive Verbindung aus der Gruppe der Ethercarboxylate, Malonate, Succinate, Gallensäuresalze, Aminosäurederivate, Sulfonamidocarboxylate, Alkylsulfate, Ethersulfate, sulfatierte Carboxylate, sulfatierte Carbonsäureglyceride, sulfatierte Carbonsäureester, sulfatierte Carbonsäureamide, Alkyl-, Aryl- und Alkylarylsulfonate, sulfonierte Carboxylate, sulfonierte Carbonsäureester, sulfonierte Carbonsäureamide, Carboxylestersulfonate, Carboxyamidsulfonate, Sulfobernsteinsäureester, Ethersulfonate, Thiosulfate, Alkylphosphate, Glycerinphosphate, Phosphonate, Phosphinate, Dithiophosphate, primäre, sekundäre, tertiäre und quaternäre Ammoniumsalze mit Alkyl-, Aryl- und Aralkylresten, alkoxylierte Ammoniumsalze, quaternäre Ammoniumester, Benzylammoniumsalze, Alkanolammoniumsalze, Pyridiniumsalze, Imidazoliniumsalze, Oxazoliniumsalze, Thiazoliniumsalze, Salze von Aminoxiden, Sulfoniumsalze, Chinoliniumsalze, Isochinoliniumsalze, Tropyliumsalze, Aminoxide, Imidazoliniumderivate, Alkylbetaine, Amidopropylbetaine, Sulfobetaine, Aminocarbonsäuren und Phospholipide.

Die Herstellung der erfindungsgemäßen DMC-Katalysatoren erfolgt üblicherweise in wäßriger Lösung durch Umsetzung von α) Metallsalzen, insbesondere der Formel (I) mit Metallcyanidsalzen insbesondere der Formel (II), β) organischen Komplexliganden b), die keine ionischen oberflächen- bzw. grenzflächenaktiven Verbindungen sind, und γ) ionischen oberflächen- bzw. grenzflächenaktiven Verbindungen c).

Bevorzugt werden dabei zunächst die wäßrigen Lösungen des Metallsalzes (z.B. Zinkchlorid, eingesetzt im stöchiometrischen Überschuß (mindestens 50 Mol-% bezogen auf das Metallcyanidsalz)) und des Metallcyanidsalzes (z.B. Kaliumhexacyanocobaltat) in Gegenwart des organischen Komplexliganden b) (z.B. tert.-Butanol) umgesetzt, wobei sich eine Suspension bildet, die die Doppelmetallcyanid-Verbindung a) (z.B. Zinkhexacyanocobaltat), Wasser d), überschüssiges Metallsalz e), und den organischen Komplexliganden b) enthält.

Der organische Komplexligand b) kann dabei in der wäßrigen Lösung des Metallsalzes und/oder des Metallcyanidsalzes vorhanden sein, oder er wird der nach Ausfällung der Doppelmetallcyanid-Verbindung a) erhaltenen Suspension unmittelbar zugegeben. Es hat sich als vorteilhaft erwiesen, die wäßrigen Lösungen und den organischen Komplexliganden b) unter starkem Rühren zu vermischen. Die gebildete Suspension wird üblicherweise anschließend mit einer oder mehreren ionischen oberflächen- bzw. grenzflächenaktiven Verbindung(en) c) behandelt. Die Komponente c) wird dabei bevorzugt in einer Mischung mit Wasser und organischem Komplexliganden b) eingesetzt.

Anschließend erfolgt die Isolierung des Katalysators aus der Suspension durch bekannte Techniken, wie Zentrifugation oder Filtration. In einer bevorzugten Ausführungsvariante wird der isolierte Katalysator anschließend mit einer wäßrigen Lösung des organischen Komplexliganden b) gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden.

Bevorzugt liegt die Menge des organischen Komplexliganden b) in der wäßrigen Waschlösung zwischen 40 und 80 Gew.-%, bezogen auf die Gesamtlösung. Weiterhin ist es vorteilhaft, der wäßrigen Waschlösung eine kleine Menge der als Komponente γ) eingesetzten ionischen oberflächen- bzw. grenzflächenaktiven Verbindung(en) c) zuzufügen, bevorzugt 0,5 bis 5 Gew.-%, bezogen auf die Gesamtlösung.

Außerdem ist es vorteilhaft, den Katalysator mehr als einmal zu waschen. Hierzu kann z.B. der erste Waschvorgang wiederholt werden. Bevorzugt ist es aber, für weitere Waschvorgänge nichtwäßrige Lösungen zu verwenden, z.B. eine Mischung aus organischem Komplexliganden und der als Komponente γ) eingesetzten ionischen oberflächen- bzw. grenzflächenaktiven Verbindung(en) c).

Der gewaschene Katalysator wird anschließend, gegebenenfalls nach Pulverisierung, bei Temperaturen von im allgemeinen 20 bis 100°C und bei Drücken von im allgemeinen 0,1 mbar bis Normaldruck (1013 mbar) getrocknet.

Ein weiterer Gegenstand der vorliegenden Erfindung ist die Verwendung der erfindungsgemäßen DMC-Katalysatoren in einem Verfahren zur Herstellung von Polyetherpolyolen durch Polyaddition von Alkylenoxiden an aktive Wasserstoffatome aufweisende Starterverbindungen.

Als Alkylenoxide kommen bevorzugt Ethylenoxid, Propylenoxid, Butylenoxid sowie deren Mischungen zum Einsatz. Der Aufbau der Polyetherketten durch Alkoxylierung kann z.B. nur mit einem monomeren Epoxid durchgeführt werden oder auch statistisch oder blockweise mit 2 oder 3 unterschiedlichen monomeren Epoxiden erfolgen. Näheres ist "Ullmanns Encyclopädie der industriellen Chemie", Band A21, 1992, S. 670f zu entnehmen.

Als aktive Wasserstoffatome aufweisende Starterverbindungen werden vorzugsweise Verbindungen mit (zahlenmittleren) Molekulargewichten von 18 bis 2.000 und 1 bis 8 Hydroxylgruppen eingesetzt. Beispielsweise werden genannt: Ethylenglykol, Diethylenglykol, Triethylenglykol, 1,2-Propylenglykol, 1,4-Butandiol, Hexamethylenglykol, Bisphenol A, Trimethylolpropan, Glycerin, Pentaerythrit, Sorbit, Rohrzucker, abgebaute Stärke oder Wasser.

Vorteilhaftenveise werden solche aktive Wasserstoffatome aufweisende Starterverbindungen eingesetzt, die z.B. durch konventionelle Alkalikatalyse aus den zuvor genannten niedemlolekularen Startern hergestellt wurden und oligomere Alkoxylierungsprodukte darstellen mit (zahlenmittleren) Molekulargewichten von 200 bis 2000.

Die durch die erfindungsgemäßen Katalysatoren katalysierte Polyaddition von Alkylenoxiden an aktive Wasserstoffatome aufweisende Starterverbindungen erfolgt im allgemeinen bei Temperaturen von 20 bis 200°C, bevorzugt im Bereich von 40 bis 180°C, besonders bevorzugt bei Temperaturen von 50 bis 150°C. Die Reaktion kann bei Gesamtdrücken von 0,0001 bis 20 bar durchgeführt werden. Die Polyaddition kann in Substanz oder einem inerten, organischen Lösungsmittel, wie Toluol und/oder THF, durchgeführt werden. Die Menge an Lösungsmittel beträgt üblicherweise 10 bis 30 Gew.-%, bezogen auf die Menge des herzustellenden Polyetherpolyols.

Die Katalysatorkonzentration wird so gewählt, daß unter den gegebenen Reaktionsbedingungen eine gute Beherrschung der Polyadditionsreaktion möglich ist. Die Katalysatorkonzentration liegt im allgemeinen im Bereich von 0,0005 Gew.-% bis 1 Gew.-%, bevorzugt im Bereich von 0,001 Gew.-% bis 0,1 Gew.-%, besonders bevorzugt im Bereich von 0,001 bis 0,0025 Gew.-%, bezogen auf die Menge des herzustellenden Polyetherpolyols.

Die (zahlenmittleren) Molekulargewichte der nach dem erfindungsgemäßen Verfahren hergestellten Polyetherpolyole liegen im Bereich von 500 bis 100.000 g/mol, bevorzugt im Bereich von 1.000 bis 50.000 g/mol, besonders bevorzugt im Bereich von 2.000 bis 20.000 g/mol.

Die Polyaddition kann kontinuierlich oder diskontinuierlich, z.B. in einem Batch- oder im Semibatchverfahren durchgeführt werden.

Die erfindungsgemäßen Katalysatoren können wegen ihrer deutlich erhöhten Aktivität in sehr niedrigen Konzentrationen eingesetzt werden (25 ppm und weniger, bezogen auf die Menge des herzustellenden Polyetherpolyols). Werden die in Gegenwart der erfindungsgemäßen Katalysatoren hergestellten Polyetherpolyole zur Herstellung von Polyurethanen verwendet (Kunststoffhandbuch, Bd. 7, Polyurethane, 3. Aufl. 1993, S. 25-32 und 57-67), kann auf eine Entfernung des Katalysators aus dem Polyetherpolyol verzichtet werden, ohne daß die Produktqualitäten des erhaltenen Polyurethans nachteilig beeinflußt werden.

### Beispiele

### Katalysatorpräparation

### Beispiel A Herstellung eines DMC-Katalysators mit Cholsäure-Natriumsalz (Katalysator A).

Zu einer Lösung aus 2 g (6 mmol) Kaliumhexacyanocobaltat in 35 ml destilliertem Wasser gibt man unter starkem Rühren (24.000 U/min) eine Lösung aus 6,2 g (45,75 mmol) Zinkchlorid in 10 ml destilliertem Wasser. Unmittelbar danach wird eine Mischung aus 25 g tert.-Butanol und 25 g destilliertem Wasser zur gebildeten Suspension gegeben und anschließend 10 min stark gerührt (24.000 U/min). Dann wird eine Mischung aus 0,5 g Cholsäure-Natriumsalz (Fluka Chemie AG, CH-9471 Buchs), 0,5 g tert.-Butanol und 50 g destilliertem Wasser zugegeben und 3 min gerührt (1.000 U/min). Der Feststoff wird durch Filtration isoliert, dann 10 min mit einer Mischung aus 35 g tert.-Butanol, 15 g destilliertem Wasser und 0,5 g Cholsäure-Natriumsalz gerührt (10.000 U/min) und erneut filtriert. Abschließend wird noch einmal 10 min mit einer Mischung aus 50 g tert.-Butanol und 0,25 g Cholsäure-Natriumsalz gerührt (10.000 U/min). Nach Filtration wird der Katalysator bei 50°C und Normaldruck bis zur Gewichtskonstanz getrocknet.
Ausbeute an getrocknetem, pulverförmigem Katalysator: 2,1 g
Elementaranalyse, Thermogravimetrische Analyse und Extraktion:
Cobalt = 12,6 Gew.-%, Zink = 27,3 Gew.-%, tert.-Butanol = 10,9 Gew.-%,
Cholsäure-Natriumsalz = 4,3 Gew.-%

### Beispiel B Herstellung eines DMC-Katalysators mit L-α-Lecithin (Katalysator B).

Es wurde verfahren wie in Beispiel A, jedoch wurde L-α-Lecithin (aus Eigelb, Fluka Chemie AG, CH-9471 Buchs) anstelle von Cholsäure-Natriumsalz eingesetzt.
Ausbeute an getrocknetem, pulverförmigem Katalysator: 2,0 g
Elementaranalyse, Thermogravimetrische Analyse und Extraktion:
Cobalt = 13,7 Gew.-%, Zink = 25,6 Gew.-%, tert.-Butanol = 7,5 Gew.-%,
L-α-Lecithin = 12,0 Gew.-%

### Beispiel C Herstellung eines DMC-Katalysators mit N-Lauroylsarcosin-Natriumsalz (Katalysator C).

Es wurde verfahren wie in Beispiel A, jedoch wurde N-Lauroylsarcosin Natriumsalz (Fluka Chemie AG, CH-9471 Buchs) anstelle von Cholsäure-Natriumsalz eingesetzt.
Ausbeute an getrocknetem, pulverförmigem Katalysator: 1,95 g
Elementaranalyse, Thermogravimetrische Analyse und Extraktion:
Cobalt = 13,2 Gew.-%, Zink = 28,6 Gew.-%, tert.-Butanol = 9,5 Gew.-%,
N-Lauroylsarcosin-Natriumsalz = 6,2 Gew.-%

### Beispiel D (Vergleichsbeispiel)

Herstellung eines DMC-Katalysators unter Einsatz von tert.-Butanol ohne ionische oberflächen- bzw. grenzflächenaktive Verbindung (Katalysator D, Synthese gemäß JP-A 4145123)

Zu einer Lösung aus 4 g (12 mmol) Kaliumhexacyanocobaltat in 75 ml destilliertem Wasser gibt man unter starkem Rühren (24.000 U/min) eine Lösung aus 10 g (73,3 mmol) Zinkchlorid in 15 ml destilliertem Wasser. Unmittelbar danach wird eine Mischung aus 50 g tert.-Butanol und 50 g destilliertem Wasser zur gebildeten Suspension gegeben und anschließend 10 min stark gerührt (24.000 U/min). Der Feststoff wird durch eine Filtration isoliert, dann 10 min mit 125 g einer Mischung aus tert.-Butanol und destilliertem Wasser (im Gewichtsverhältnis 70/30) gerührt (10.000 U/min) und erneut filtriert. Abschließend wird noch einmal 10 min mit 125 g tert.-Butanol gerührt (10.000 U/min). Nach Filtration wird der Katalysator bei 50°C und Normaldruck bis zur Gewichtskonstanz getrocknet.
Ausbeute an getrocknetem, pulverförmigem Katalysator: 3,08 g
Elementaranalyse:
Cobalt = 13,6 Gew.%, Zink = 27,4 Gew.-%, tert.-Butanol = 14,2 Gew.-%,
**Herstellung von Polyetherpolyolen**

### Allgemeine Durchführung

In einem 500 ml Druckreaktor werden 50 g Polypropylenglykol-Starter (zahlenmittleres Molekulargewicht = 1.000 g/mol) und 3 bis 5 mg Katalysator (15 bis 25 ppm, bezogen auf die Menge des herzustellenden Polyetherpolyols) unter Schutzgas (Argon) vorgelegt und unter Rühren auf 105°C aufgeheizt. Anschließend wird Propylenoxid (ca. 5 g) auf einmal zudosiert, bis der Gesamtdruck auf 2,5 bar angestiegen ist. Weiteres Propylenoxid wird erst dann wieder zudosiert, wenn ein beschleunigter Druckabfall im Reaktor beobachtet wird. Dieser beschleunigte Druckabfall zeigt an, daß der Katalysator aktiviert ist. Anschließend wird das restliche Propylenoxid (145 g) kontinuierlich bei einem konstanten Gesamtdruck von 2,5 bar zudosiert. Nach vollständiger Propylenoxid-Dosierung und 2 Stunden Nachreaktionszeit bei 105°C werden flüchtige Anteile bei 90°C (1 mbar) abdestilliert und anschließend auf Raumtemperatur abgekühlt.

Die erhaltenen Polyetherpolyole wurden durch Ermittlung der OH-Zahlen, der Doppelbindungsgehalte und der Viskositäten charakterisiert.

Der Reaktionsverlauf wurde anhand von Zeit-Umsatz-Kurven (Propylenoxid-Verbrauch [g] vs. Reaktionszeit [min]) verfolgt. Aus dem Schnittpunkt der Tangente an den steilsten Punkt der Zeit-Umsatz-Kurve mit der verlängerten Basislinie der Kurve wurde die Induktionszeit bestimmt. Die für die Katalysatoraktivität maßgeblichen Propoxylierungszeiten entsprechen dem Zeitraum zwischen Katalysatoraktivierung (Ende der Induktionsperiode) und dem Ende der Propylenoxid-Dosierung. Die Gesamtreaktionszeit ist die Summe aus Induktions- und Propoxylierungszeit.

### Beispiel 1

| Herstellung von Polyetherpolyol mit Katalysator A (15 ppm) | | |
|---|---|---|
| Induktionszeit: | | 230 min |
| Propoxylierungszeit: | | 95 min |
| Gesamtreaktionszeit: | | 325 min |
| Polyetherpolyol: | OH-Zahl (mg KOH/g): | 28,9 |
| | Doppelbindungsgehalt (mMol/kg): | 4 |
| | Viskosität 25°C (mPas): | 982 |

Ohne Entfernung des Katalysators beträgt der Metallgehalt im Polyol: Zn = 4 ppm, Co = 2 ppm.

### Beispiel 2

| Herstellung von Polyetherpolyol mit Katalysator B (25 ppm) | | |
|---|---|---|
| Induktionszeit: | | 125min |
| Propoxylierungszeit: | | 140 min |
| Gesamtreaktionszeit: | | 265 min |
| Polyetherpolyol: | OH-Zahl (mg KOH/g): | 29,5 |
| | Doppelbindungsgehalt (mMol/kg): | 6 |
| | Viskosität 25°C (mPas): | 921 |

### Beispiel 3

| Herstellung von Polyetherpolyol mit Katalysator C (25 ppm) | | |
|---|---|---|
| Induktionszeit: | | 350 min |
| Propoxylierungszeit: | | 40 min |
| Gesamtreaktionszeit: | | 390 min |
| Polyetherpolyol: | OH-Zahl (mg KOH/g): | 30,4 |
| | Doppelbindungsgehalt (mMol/kg): | 6 |
| | Viskosität 25°C (mPas): | 842 |

### Beispiel 4 (Vergleich)

Katalysator D (15 ppm) zeigt unter den oben beschriebenen Reaktionsbedingungen auch nach 14 h Induktionszeit noch keine Aktivität.

Bei Einsatz von 50 ppm Katalysator D betrug die Induktionszeit ca. 9 h. Die Propoxylierungszeit betrug mehr als 12 Stunden, wobei im Laufe der Reaktion Katalysatordesaktivierung auftrat.

Beispiele 1-3 zeigen, daß die neuen, erfindungsgemäßen DMC-Katalysatoren aufgrund ihrer deutlich erhöhten Aktivität bei der Polyetherpolyol-Herstellung in so geringen Konzentrationen eingesetzt werden können, daß auf eine Abtrennung des Katalysators aus dem Polyol verzichtet werden kann.

## Patentansprüche

1. Doppelmetallcyanid (DMC)-Katalysator enthaltend
a) eine oder mehrere Doppelmetallcyanid-Verbindungen,
b) einen oder mehrere, von c) verschiedene, organische Komplexliganden, und
c) eine oder mehrere ionische oberflächen- bzw. grenzflächenaktive Verbindungen aus der Gruppe der Alkylcarboxylate, Ethercarboxylate, Malonate, Succinate, Gallensäuresalze, Aminosäurederivate, Sulfonamidocarboxylate, Alkylsulfate, Ethersulfate, sulfatierte Carboxylate, sulfatierte Carbonsäureglyceride, sulfatierte Carbonsäureester, sulfatierte Carbonsäureamide, Alkyl-, Aryl- und Alkylarylsulfonate, sulfonierte Carboxylate, sulfonierte Carbonsäureester, sulfonierte Carbonsäureamide, Carboxylestersulfonate, Carboxyamidsulfonate, Sulfobernsteinsäureester, Ethersulfonate, Thiosulfate, Alkylphosphate, Glycerinphosphate, Phosphonate, Phosphinate, Dithiophosphate, primäre, sekundäre, tertiäre und quaternäre Ammoniumsalze mit Alkyl-, Aryl- und Aralkylresten, alkoxylierte Ammoniumsalze, quaternäre Ammoniumester, Benzylammoniumsalze, Alkanolammoniumsalze, Pyridiniumsalze, Imidazoliniumsalze, Oxazoliniumsalze, Thiazoliniumsalze, Salze von Aminoxiden, Sulfoniumsalze, Chinoliniumsalze, Isochinoliniumsalze, Tropyliumsalze, Aminoxide, Imidazoliniumderivate, Alkylbetaine, Amidopropylbetaine, Sulfobetaine, Aminocarbonsäuren und Phospholipide.

2. DMC-Katalysator nach Anspruch 1, zusätzlich enthaltend d) Wasser und/oder e) wasserlösliches Metallsalz der Formel M(X)ₙ, wobei M ausgewählt ist aus den Metallen Zn (II), Fe (II), Ni (II), Mn (II), Co (II), Sn (II), Pb (II), Fe (III), Mo (IV), Mo (VI), Al (III), V (V), V (IV), Sr (II), W (IV), W (VI), Cu (II) und Cr (III), X gleiche oder verschiedene Anionen bedeutet, und n 1, 2 oder 3 ist.

3. DMC-Katalysator nach Anspruch 1 oder 2, worin die Doppelmetallcyanid-Verbindung Zinkhexacyanocobaltat(III) ist.

4. DMC-Katalysator nach einem der Ansprüche 1 bis 3, worin der organische Komplexligand tert.-Butanol ist.

5. DMC-Katalysator nach einem der Ansprüche 1 bis 4, worin der Katalysator 1 bis 80 Gew.-% einer oder mehrerer ionischer oberflächen- bzw. grenzflächenaktiven Verbindung(en) enthält.

6. DMC-Katalysator nach einem der Ansprüche 1 bis 5, worin die ionische oberflächen- bzw. grenzflächenaktive Verbindung eine hydrophile anionische Gruppe enthält.

7. DMC-Katalysator nach einem der Ansprüche 1 bis 5, worin die ionische oberflächen- bzw. grenzflächenaktive Verbindung eine hydrophile kationische Gruppe enthält.

8. DMC-Katalysator nach einem der Ansprüche 1 bis 5, worin die oberflächen- bzw. grenzflächenaktive Verbindung eine hydrophile zwitterionische Gruppe enthält.

9. Verfahren zur Herstellung eines DMC-Katalysators, enthaltend die Schritte
i) Umsetzung in wäßriger Lösung von
α) Metallsalzen mit Metallcyanidsalzen
β) organischen Komplexliganden, die keine ionischen oberflächen- bzw. grenzflächenaktiven Verbindungen sind, und
γ) ionischen oberflächen- bzw. grenzflächenaktiven Verbindungen aus der Gruppe der Alkylcarboxylate, Ethercarboxylate, Malonate, Succinate, Gallensäuresalze, Aminosäurederivate, Sulfonamidocarboxylate, Alkylsulfate, Ethersulfate, sulfatierte Carboxylate, sulfatierte Carbonsäureglyceride, sulfatierte Carbonsäureester, sulfatierte Carbonsäureamide, Alkyl-, Aryl- und Alkylarylsulfonate, sulfonierte Carboxylate, sulfonierte Carbonsäureester, sulfonierte Carbonsäureamide, Carboxylestersulfonate, Carboxyamidsulfonate, Sulfobernsteinsäureester, Ethersulfonate, Thiosulfate, Alkylphosphate, Glycerinphosphate, Phosphonate, Phosphinate, Dithiophosphate, primäre, sekundäre, tertiäre und quaternäre Ammoniumsalze mit Alkyl-, Aryl- und Aralkylresten, alkoxylierte Ammoniumsalze, quaternäre Ammoniumester, Benzylammoniumsalze, Alkanolammoniumsalze, Pyridiniumsalze, Imidazoliniumsalze, Oxazoliniumsalze, Thiazoliniumsalze, Salze von Aminoxiden, Sulfoniumsalze, Chinoliniumsalze, Isochinoliniumsalze, Tropyliumsalze, Aminoxide, Imidazoliniumderivate, Alkylbetaine, Amidopropylbetaine, Sulfobetaine, Aminocarbonsäuren und Phospholipide,
ii) Isolieren, Waschen und Trocknen des in Schritt i) erhaltenen Katalysators.

10. Verfahren zur Herstellung von Polyetherpolyolen durch Polyaddition von Alkylenoxiden an aktive Wasserstoffatome aufweisenden Starterverbindungen, in Gegenwart eines oder mehrerer DMC-Katalysatoren nach einem der Ansprüche 1 bis 8.

11. Verwendung eines oder mehrerer DMC-Katalysatoren nach einem der Ansprüche 1 bis 8 zur Herstellung von Polyetherpolyolen durch Polyaddition von Alkylenoxiden an aktive Wasserstoffatome aufweisende Starterverbindungen.

## Claims

1. Double metal cyanide (DMC) catalyst containing
a) one or more double metal cyanide compounds,
b) one or more organic complex ligands other than c), and
c) one or more ionic surface- or interface-active compounds from the group comprising alkyl carboxylates, ether carboxylates, malonates, succinates, colic acid salts, amino acid derivatives, sulfonamidocarboxylates, alkyl sulphates, ether sulphates, sulphated carboxylates, sulphated carboxylic acid glycerides, sulphated carboxylic acid esters, sulphated carboxylic acid amides, alkyl, aryl and alkylaryl sulfonates, sulfonated carboxylates, sulfonated carboxylic acid esters, sulfonated carboxylic acid amides, carboxyl ester sulfonates, carboxyamide sulfonates, sulfosuccinic acid esters, ether sulfonates, thiosulfates, alkyl phosphates, glycerol phosphates, phosphonates, phosphinates, dithiophosphates, primary, secondary, tertiary and quaternary ammonium salts with alkyl, aryl and arylkyl residues, alkoxylated ammonium salts, quaternary ammonium esters, benzylammonium salts, alkanol ammonium salts, pyridinium salts, imidazolinium salts, oxazolinium salts, thiazolinium salts, salts of amine oxides, sulfonium salts, quinolinium salts, isoquinolinium salts, tropylium salts, amine oxides, imidazolinium derivatives, alkylbetaines, amidopropylbetaines, sulfobetaines, aminocarboxylic acids and phospholipids.

2. DMC catalyst according to claim 1, additionally containing d) water and/or e) water-soluble metal salt of the formula M(X)ₙ, where M is selected from the metals Zn (II), Fe (II), Ni (II), Mn (II), Co (II), Sn (II), Pb (II), Fe (III), Mo (IV), Mo (VI), Al (III), V (V), V (IV), Sr (II), W (IV), W (VI), Cu (II) and Cr (III), X denotes identical or different anions, and n is 1, 2 or 3.

3. DMC catalyst according to claim 1 or 2, in which the double metal cyanide compound is zinc hexacyanocobaltate(III).

4. DMC catalyst according to one of claims 1 to 3, in which the organic complex ligand is tert.-butanol.

5. DMC catalyst according to one of claims 1 to 4, in which the catalyst contains 1 to 80 wt.% of one or more ionic surface- or interface-active compound(s).

6. DMC catalyst according to one of claims 1 to 5, in which the ionic surface- or interface-active compound contains a hydrophilic anionic group.

7. DMC catalyst according to one of claims 1 to 5, in which the ionic surface- or interface-active compound contains a hydrophilic cationic group.

8. DMC catalyst according to one of claims 1 to 5, in which the surface- or interface-active compound contains a hydrophilic zwitterionic group.

9. Process for the production of a DMC catalyst, comprising the steps
i) reaction in an aqueous solution of
α) metal salts with metal cyanide salts
β) organic complex ligands which are not ionic surface- or interface-active compounds, and
γ) ionic surface- or interface-active compounds from the group comprising alkyl carboxylates, ether carboxylates, malonates, succinates, colic acid salts, amino acid derivatives, sulfonamidocarboxylates, alkyl sulphates, ether sulphates, sulphated carboxylates, sulphated carboxylic acid glycerides, sulphated carboxylic acid esters, sulphated carboxylic acid amides, alkyl, aryl and alkylaryl sulfonates, sulfonated carboxylates, sulfonated carboxylic acid esters, sulfonated carboxylic acid amides, carboxyl ester sulfonates, carboxyamide sulfonates, sulfosuccinic acid esters, ether sulfonates, thiosulfates, alkyl phosphates, glycerol phosphates, phosphonates, phosphinates, dithiophosphates, primary, secondary, tertiary and quaternary ammonium salts with alkyl, aryl and arylkyl residues, alkoxylated ammonium salts, quaternary ammonium esters, benzylammonium salts, alkanol ammonium salts, pyridinium salts, imidazolinium salts, oxazolinium salts, thiazolinium salts, salts of amine oxides, sulfonium salts, quinolinium salts, isoquinolinium salts, tropylium salts, amine oxides, imidazolinium derivatives, alkylbetaines, amidopropylbetaines, sulfobetaines, aminocarboxylic acids and phospholipids,
ii) isolation, washing and drying of the catalyst obtained in step i).

10. Process for the production of polyether polyols by polyaddition of alkylene oxides onto starter compounds containing active hydrogen atoms in the presence of one or more DMC catalysts according to one of claims 1 to 8.

11. Use of one or more DMC catalysts according to one of claims 1 to 8 for the production of polyether polyols by polyaddition of alkylene oxides onto starter compounds containing active hydrogen atoms.

## Revendications

1. Catalyseur à base de cyanures métalliques doubles (CMD) contenant
a) un ou plusieurs cyanures métalliques doubles,
b) un ou plusieurs ligands de complexes organiques autres que ceux énumérés en c) ci-après,
c) un ou plusieurs composés tensio-actifs (c'est-à-dire agissant sur la tension superficielle et la tension interfaciale) ioniques du groupe des alkylcarboxylates, des éthercarboxylates, des malonates, des succinates, des sels d'acides biliaires, des dérivés d'aminoacides, des sulfonamidocarboxylates, des alkylsulfates, des éthersulfates, des carboxylates sulfatés, des glycérides d'acides carboxyliques sulfatés, des esters d'acides carboxyliques sulfatés, des carboxamides sulfatés, des alkyl-, aryl- et alkylaryl-sulfonates, des carboxylates sulfonés, des esters d'acides carboxyliques sulfonés, des carboxamides sulfonés, des carboxylestersulfonates, des carboxamidesulfonates, des esters sulfosucciniques, des éthersulfonates, des thiosulfates, des alkylphosphates, des glycérophosphates, des phosphonates, des phosphinates, des dithiophosphates, des sels d'ammonium primaires, secondaires, tertiaires et quaternaires à groupes alkyle, aryle et aralkyle, des sels d'ammonium alcoxylés, des esters d'ammonium quaternaires, des sels de benzylammonium, de sels d'alcanolammonium, des sels de pyridinium, des sels d'imidazolinium, des sels d'oxazolinium, des sels de thiazolinium, des sels d'oxydes d'amines, des sels de sulfonium, des sels de quinoléinium, des sels d'isoquinoléinium, des sels de tropylium, des oxydes d'amines, des dérivés d'imidazolinium, des alkylbétaïnes, des amidopropylbétaïnes, des sulfobétaïnes, des acides aminocarboxyliques et des phospholipides.

2. Catalyseur à base de CMD selon la revendication 1, contenant en outre d) de l'eau et/ou e) un sel métallique soluble dans l'eau de formule M(X)ₙ dans laquelle M est choisi parmi les métaux Zn(II), Fe(II), Ni(II), Mn(II), Co(II), Sn(II), Pb(II), Fe(III), Mo(IV), Mo(VI), Al(III), V(V), V(IV), Sr(II), W(IV), W(VI), Cu(II) et Cr(III), les symboles X représentent des anions identiques ou différents et n est égal à 1, 2 ou 3.

3. Catalyseur à base de CMD selon la revendication 1 ou 2, dans lequel le cyanure métallique double est l'hexacyanocobaltate(III) de zinc.

4. Catalyseur à base de CMD selon une des revendications 1 à 3, dans lequel le ligand de complexe organique est le tert-butanol.

5. Catalyseur à base de CMD selon une des revendications 1 à 4, contenant 1 à 80 % en poids d'un ou plusieurs composés tensio-actifs ioniques.

6. Catalyseur à base de CMD selon une des revendications 1 à 5, dans lequel le composé tensio-actif ionique contient un groupe anionique hydrophile.

7. Catalyseur à base de CMD selon une des revendications 1 à 5, dans lequel le composé tensio-actif ionique contient un groupe cationique hydrophile.

8. Catalyseur à base de CMD selon une des revendications 1 à 5, dans lequel le composé tensio-actif contient un groupe hydrophile amphotère.

9. Procédé pour la préparation d'un catalyseur à base de CMD, comprenant les stades opératoires suivants :
i) réaction en solution aqueuse de
α) des sels métalliques avec des cyanures métalliques
β) des ligands de complexes organiques autres que des composés tensio-actifs ioniques et
γ) des composés tensio-actifs ioniques du groupe des alkylcarboxylates, des éthercarboxylates, des malonates, des succinates, des sels d'acides biliaires, des dérivés d'aminoacides, des sulfonamidocarboxylates, des alkylsulfates, des éthersulfates, des carboxylates sulfatés, des glycérides d'acides carboxyliques sulfatés, des esters d'acides carboxyliques sulfatés, des carboxamides sulfatés, des alkyl-, aryl- et alkylaryl-sulfonates, des carboxylates sulfonés, des esters d'acides carboxyliques sulfonés, des carboxamides sulfonés, des carboxylestersulfonates, des carboxamidesulfonates, des esters sulfosucciniques, des éthersulfonates, des thiosulfates, des alkylphosphates, des glycérophosphates, des phosphonates, des phosphinates, des dithiophosphates, des sels d'ammonium primaires, secondaires, tertiaires et quaternaires à groupes alkyle, aryle et aralkyle, des sels d'ammonium alcoxylés, des esters d'ammonium quaternaires, des sels de benzylammonium, de sels d'alcanolammonium, des sels de pyridinium, des sels d'imidazolinium, des sels d'oxazolinium, des sels de thiazolinium, des sels d'oxydes d'amines, des sels de sulfonium, des sels de quinoléinium, des sels d'isoquinoléinium, des sels de tropylium, des oxydes d'amines, des dérivés d'imidazolinium, des alkylbétaïnes, des amidopropylbétaïnes, des sulfobétaïnes, des acides aminocarboxyliques et des phospholipides.
ii) isolement, lavage et séchage du catalyseur obtenu au stade i).

10. Procédé pour la préparation de polyéther-polyols par polyaddition d'oxydes d'alkylène sur des composés de départ portant des atomes d'hydrogène actif en présence d'un ou plusieurs catalyseurs à base de CMD selon l'une des revendications 1 à 8.

11. Utilisation d'un ou plusieurs catalyseurs à base de CMD selon une des revendications 1 à 8 pour la préparation de polyéther-polyols par polyaddition d'oxyde d'alkylène sur des composés de départ portant des atomes d'hydrogène actif.
